# EUROPÄISCHE PATENTSCHRIFT

(11) **EP 0 985 837 B1**
(45) Veröffentlichungstag und Bekanntmachung des Hinweises auf die Patenterteilung: **06.10.2004**
(21) Anmeldenummer: 99114639.0
(22) Anmeldetag: 27.07.1999
(51) Int. Cl.: F16C 3/10, F16C 3/02

(54) **Welle, insbesondere Antriebswelle, Lenkerarm, Strebe oder dergleichen**
Shaft, in particular drive shaft, guide arm, strut or similar
Arbre, en particulier arbre moteur, bras de guidage, entretoise ou similaire

(30) Priorität: 11.09.1998 DE 19841606
(43) Veröffentlichungstag der Anmeldung: 15.03.2000
(73) Patentinhaber: Dr.Ing. h.c.F. Porsche Aktiengesellschaft, 70435 Stuttgart (DE)
(72) Erfinder: Separautzki, Reinhold, 71696 Möglingen (DE); Stach, Jens, 71296 Heimsheim (DE)

(56) Entgegenhaltungen:
- EP-A- 0 793 030
- AU-B- 515 017
- DE-A- 2 302 551
- DE-A- 2 715 076
- DE-C- 4 327 908

## Beschreibung

Die Erfindung bezieht sich auf eine Welle, insbesondere eine Antriebswelle, einen Lenkerarm, Strebe oder dergleichen nach dem Oberbegriff des Anspruchs 1.

Aus der DE 41 32 779 C2 ist eine Achsstrebe für das Fahrwerk eines Fahrzeugs bekannt, die einen Hohlschaft als Grundelement mit Endteilen, wie Lagerköpfe umfaßt. Die Lagerköpfe sind mit dem Hohlschaft über eine Reibschweißung verbunden.

Die DE 23 02 551 A1 offenbart ein Verfahren zur Herstellung einer Gelenkwelle im Spritzgussverfahren, wobei Gelenkwelle und Gelenkwellenköpfe einstückig ausgebildet sind. Das eigentliche Gelenkwellenrohr besteht aus einem Doppelrohr, bei dem beide Rohre über spiralförmig gewundene Besteifungsrippen verbunden sind. Das innere Gelenkwellendoppelrohr ist dabei nicht mit den Gelenkwellenköpfen verbunden.

Schließlich zeigt die gattungsgemäße EP 0 793 030 A2 eine Antriebswelle, die aus einem rohrförmigen Grundelement und über eine Reibschweißung verbundenen Endteilen besteht.

Aufgabe der Erfindung ist es, eine Welle, insbesondere eine Antriebswelle, einen Lenkerarm für eine Radaufhängung oder eine Strebe zu schaffen, die in einfacher Weise durch eine Reibschweißung mit Endteilen verbindbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß als Grundelement beispielsweise ein stranggepreßtes Doppelrohr mit radialen Längsrippen verwendet wird, das wirtschaftlich und schnell herstellbar ist und welches mit einem beliebig gestalteten Endteil, sei es ein Gabelkopf, einer Lagerkopf oder dergleichen über eine Reibschweißung verbindbar ist.

Die Erfindung ist nicht auf ein Doppelrohr beschränkt, es können auch mehr als zwei ineinanderliegende Rohre über die Längsrippen verbunden sein, wobei auch im Zentrum des inneren Rohres Rippen angeordnet sein können.

Damit eine Reibschweißung in einfacher Weise durchführbar ist, sind die Längsrippen im Grundelement zurückversetzt, so daß die Stirnseite der Rohre Schweißringe bilden können, welche freiliegend und korrespondierend zu entsprechenden Schweißringen an den Stirnseiten der Endteile angeordnet sind.

Die Werkstoffe der zu verbindenden Teile, wie das Grundelement und die Endteile können unterschiedlich ausgeführt sein. So kann das Grundelement beispielsweise aus einem Leichtmetall und die Endteile aus einem Stahl bestehen. Ebenso ist es möglich, daß das Grundelement aus Stahl und die Endteile aus Leichtmetall bestehen.

Ein Ausführungsbeispiel der Erfindung ist in den Zeichnungen dargestellt und wird im folgenden näher beschrieben.

Es zeigen
- Fig. 1: einen Längsschnitt durch ein Grundelement mit über eine Reibschweißung verbundenem Endteil,
- Fig. 2: einen Schnitt nach der Linie II-II der Fig. 1 und
- Fig. 3: eine Darstellung des Grundelements und eines Endteiles vor einer Verbindung durch eine Reibschweißung.

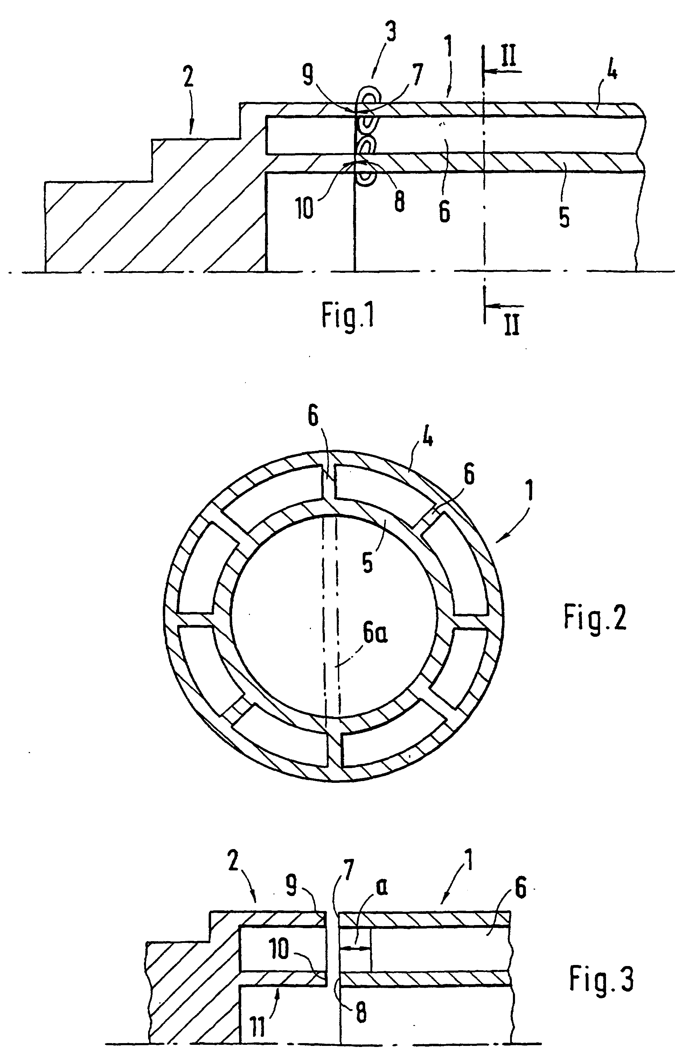

Wie in Fig. 1 näher dargestellt, wird ein Grundelement 1 mit einem Endteil 2 über eine Reibschweißung 3 verbunden.

Das Grundelement 1 kann eine Welle, beispielsweise eine Antriebswelle sein oder ein Lenkerarm für eine Radaufhängung oder eine beliebig anwendbare Strebe. Mit diesem Grundelement 1 ist an den freien Enden jeweils ein Endteil 2, wie beispielsweise ein Lagerelement, eine Lagerschale oder ein Gabelkopf verbunden.

Das Grundelement 1 besteht beispielsweise aus einem Doppelrohr, wobei ein äußeres Rohr 4 mit einem inneren Rohr 5 über radiale, längsverlaufende Rippen 6 miteinander verbunden sind.

Das Grundelement 1 besteht vorzugsweise aus einem stranggepreßten Doppelrohr. Denkbar sind je nach den Festigkeitsanforderungen auch mehr als zwei ineinanderliegende Rohre, die jeweils über längsverlaufende Rippen miteinander verbunden sein können. Ebenfalls kann im Zentrum des Innenrohres auch eine Verstärkung über längsverlaufende Rippen vorgesehen sein, wie strichpunktiert anhand einer Rippe 6a angedeutet ist.

Die Verbindung mittels der Reibschweißung 3 erfolgt jeweils über zwei Schweißringe 7, 8 am Grundelement 1 und über zwei korrespondierende Schweißringe 9,10 am Endteil 2.

Wie in Fig. 3 näher dargestellt, sind die Rippen 6 von den stirnseitigen Schweißringen 7, 8 um einen Betrag a zurückversetzt, damit keine Behinderung beim Reibschweißen erfolgen kann. Nach der Reibschweißung ist dieser Abstand a aufgebraucht, wie in Fig. 1 näher dargestellt ist.

Die Endteile 2 weisen ebenfalls ein als Doppelrohr ausgebildeten Bereich 11 mit den stirnseitigen Schweißringen 9, 10 auf.

In der Zeichnung ist nur ein Endteil 2 des Grundelements 1 dargestellt, das andere Ende des Grundelements 1 kann ebenfalls mit einem Endteil 2 versehen sein.

## Patentansprüche

1. Welle, insbesondere Antriebswelle, Lenkerarm, Strebe oder dergleichen, mit einem rohrförmigen Grundelement (1) und mit einem mit dem Grundelement über eine Reibschweißung verbundenem Endteil (2), **dadurch gekennzeichnet, daß**
- das Grundelement (1) aus zwei Rohren (4,5) besteht, die über längsverlaufende, radiale Rippen (6) miteinander verbunden sind, wobei das Grundelement (1) stirnseitig zwei Schweißringe (7, 8) aufweist, und
- das Endteil (2) zu den Schweißringen (7, 8) des Grundelementes (1) korrespondierende Schweißringe (9, 10) aufweist.

2. Welle nach Anspruch 1, **dadurch gekennzeichnet, daß** die längsverlaufenden Rippen (6) zwischen den Rohren (4, 5) im Abstand (a) zurückversetzt zu den zwei stirnseitigen Schweißringen (7, 8) angeordnet sind.

3. Welle nach den Ansprüchen 1 oder 2, **dadurch gekennzeichnet, daß** die Materialien des Grundelements (1) und des Endteiles(2) unterschiedlich und/oder gleich ausgeführt sind.

4. Welle nach Anspruch 3, **dadurch gekennzeichnet, daß** das Grundelement (1) aus einem Leichtmetall und das Endteil aus einem Stahlwerkstoff bestehen.

5. Welle nach den Ansprüchen 1, 2, 3 oder 4, **dadurch gekennzeichnet, daß** das Endteil (2) einen die beiden Schweißringe (9, 10) bildenden Bereich (11) aufweist, der als Doppelrohr ausgeführt ist.

6. Welle nach den Ansprüchen 1, 2, 3, 4 oder 5, **dadurch gekennzeichnet, daß** die längsverlaufenden, radialen Rippen (6) jeweils zwischen den Rohren (4, 5) als auch im Zentrum des inneren Rohres (5) angeordnet sind.

## Claims

1. A shaft, especially a drive shaft, control arm, strut or the like, comprising a tubular basic element (1) and an end part (2) connected to the basic element by friction welding, **characterised in that**
- the basic element (1) comprises two pipes (4, 5) connected to one another by longitudinally extending, radial ribs (6), the basic element (1) having two welding rings (7, 8) at its end, and
- the end part (2) has welding rings (9, 10) corresponding to the welding rings (7, 8) of the basic element (1).

2. A shaft according to claim 1, **characterised in that** the longitudinally extending ribs (6) are arranged between the pipes (4, 5) and are set back from the two end welding rings (7, 8) by the distance (a).

3. A shaft according to claim 1 or 2, **characterised in that** the materials of the basic element (1) and the end part (2) are different and/or the same.

4. A shaft according to claim 3, **characterised in that** the basic element (1) is made of a light metal and the end part is made of a steel material.

5. A shaft according to claim 1, 2, 3 or 4, **characterised in that** the end part (2) has a region (11) which forms the two welding rings (9, 10) and is constructed as a double pipe.

6. A shaft according to claim 1, 2, 3, 4 or 5, **characterised in that** the longitudinally extending, radial ribs (6) are arranged between the pipes (4, 5) and also in the centre of the inner pipe (5).

## Revendications

1. Arbre, en particulier arbre moteur, bras de guidage, entretoise ou similaire, comportant un élément de base (1) de forme tubulaire et une partie terminale 2 reliée à l'élément de base par une soudure par friction, **caractérisé en ce que**
- l'élément de base (1) est constitué de deux tubes (4, 5) qui sont reliés entre eux par des nervures (6) radiales s'étendant longitudinalement, l'élément de base (1) comportant sur son côté frontal deux anneaux de soudure (7, 8), et
- la partie terminale (2) comportant des anneaux de soudage (9, 10) correspondant aux anneaux de soudage (7, 8) de l'élément de base (1).

2. Arbre selon la revendication 1, **caractérisé en ce que** les nervures (6) s'étendant longitudinalement entre les tubes (4, 5) sont disposées en retrait, de la distance (a), par rapport aux deux anneaux de soudage (7, 8) frontaux.

3. Arbre selon les revendications 1 ou 2, **caractérisé en ce que** les matériaux de l'élément de base (1) et de la partie terminale (2) sont réalisés différents et/ou identiques.

4. Arbre selon la revendication 3, **caractérisé en ce que** l'élément de base (1) est constitué d'un métal léger et la partie terminale d'un matériau d'acier.

5. Arbre selon les revendications 1, 2, 3 ou 4, **caractérisé en ce que** la partie terminale (2) présente une zone (11) formant les deux anneaux de soudage (9, 10), laquelle est réalisée sous la forme d'un tube double.

6. Arbre selon les revendications 1, 2, 3, 4 ou 5, **caractérisé en ce que** les nervures radiales (6) s'étendant longitudinalement sont disposées chacune entre les tubes (4, 5) ainsi qu'au centre du tube intérieur (5).
